# EUROPEAN PATENT SPECIFICATION

(11) **EP 2 033 402 B1**
(45) Date of publication and mention of the grant of the patent: **11.11.2015**
(21) Application number: 07730787.4
(22) Date of filing: 28.05.2007
(51) Int. Cl.: H04L 29/06, H04L 29/08

(54) **IMPROVED USE OF PARALLEL MEDIA FLOWS**
VERBESSERTE VERWENDUNG VON PARALLELEN MEDIENFLÜSSEN
UTILISATION AMÉLIORÉE DE FLUX MULTIMÉDIA PARALLÈLES

(30) Priority: 29.05.2006 FI 20065360
(43) Date of publication of application: 11.03.2009
(73) Proprietor: TeliaSonera AB, 10663 Stockholm (SE)
(72) Inventor: TUOMELA, Frans, 00640 Helsinki (FI)
(74) Representative: Kolster Oy Ab
(86) International application number: PCT/FI2007/050300
(87) International publication number: WO 2007/138164

(56) References cited:
- EP-A1- 1 148 688
- EP-A2- 1 193 944
- WO-A1-03/003767
- WO-A1-2005/064958
- WO-A1-2006/038839
- WO-A1-2006/052176
- NIKOLAOS ANEROUSIS ET AL: "TOPS: An Architecture for Telephony over Packet Networks" IEEE JOURNAL ON SELECTED AREAS IN COMMUNICATIONS, IEEE SERVICE CENTER, PISCATAWAY, US, vol. 17, no. 1, 1 January 1999 (1999-01-01), XP011054890 ISSN: 0733-8716

## Description

### FIELD OF THE INVENTION

The present invention relates to telecommunications and more particularly to a method, a telecommunication system, network element, user equipment, a computer program product, and computer program distribution medium according to the Independent claims.

### BACKGROUND OF THE INVENTION

In information sharing media flows are controllably distributed between participating users. Information sharing typically requires a connection that creates an association for telecommunication between the participants and facilitates transmission of media flows.

In advanced telecommunication systems a connection provides information transfer for a call or a session. A call refers to a circuit-switched connection and implements an end-to-end logical relationship between two or more parties. A circuit switched call typically uses one bearer at a time, for as long as the connection exists. A session relates to a packet switched connection and allows consequent execution of Interactive data processing between two or more users, or between users and applications.

From the state of the art it is known that user terminals may maintain simultaneous connections for separate flows of information with different communicating parties. For example, even in simplest mobile stations a user may receive short messages from the short messaging centre during an ongoing voice call. In new advanced terminals, one terminal may comprise applications that act as peer-to-peer entities and communicate with different parties over simultaneously existing packet switched or circuit switched connections. For example, EP 1193944 an arrangement where a server receives a service request from a terminal in voice connection with another terminal, establishes a new connection for image datato a recaption device and a large screen of the processor, and Nikolaos Anerousis et al: "TOPS: An Architecture for Telephony over Packet Networks" IEEE Journal on Selected Areas in Communications, IEEE Service Center, vol 17, no 1, 1 january 1990, discloses an ALS message for specifying desired changes to the call state e.g. adding a media channel.

The recent technical specifications, like the technical specification from the 3rd Generation Partnership Project, Technical Specification Group Core Network and Terminals, 3GPP TS 24.279 v1.0.0 (2006-02), disclose specific technical realisations for the combination of circuit switched calls and Internet Protocol (IP) multimedia sessions when using them simultaneously between the same two users, meaning virtually in the same connection. The specification is primarily based on the existing procedures that are defined for circuit switched calls and IP multimedia sessions (IMS). Furthermore, the specification describes some additional essential functions for adding an IP multimedia session to an ongoing call and vice versa, some supplementary services as far as they relate to circuit switched IMS combinational service, and procedures for supporting capability exchange.

The combined operation involves a capability exchange that allows user terminals to exchange information on their capability of simultaneous circuit switched and IMS services, and on the capability of the current radio environment to support simultaneous circuit switched and packet switched services. In case a user does not have a terminal that is capable of simultaneous circuit switched and IMS services or resides in an area with poor radio environment, the combination of circuit switched calls and IMS sessions is not possible. This is a severe disadvantage, since in many communication instances simultaneous sharing of more than one media stream allows effective discussions and processing of the issues at hand, and is therefore considered most useful.

### BRIEF DESCRIPTION OF THE INVENTION

An object of the present invention is thus to provide a solution so as to improve utilization of parallel media flows between two or more users.

The objects of the invention are achieved by a method, a telecommunication system, network element, user equipment, a computer program product, and computer program distribution medium, which are characterized by what is stated in the independent claims. The preferred embodiments of the invention are disclosed in the dependent claims.

The invention is based on the idea of providing a connection mechanism that includes an intermediate control element that, to an extent, interacts with both of the media flows. The control element is configured able to detect a situation when a primary terminal of a user is not able to support the type of combined media flows in his or her primary terminal. If such incapability exists the control element is able to divert a media flow to a secondary terminal of the user. For the diversion, the control element terminates necessary control procedures towards the other terminating users and simulates the functions of the primary user equipment. Due to the diversion, the media flows may stream parallelly to and from the primary and secondary terminal, and both media flows are simultaneously accessible to the user in control of the primary and the secondary terminal.

An advantage of the invention is that use of parallel media flows becomes possible to a much wider group of users, and terminal types.

### BRIEF DESCRIPTION OF THE DRAWINGS

In the following the invention will be described in greater detail by means of preferred embodiments with reference to the attached drawings, in which
Figure 1 illustrates a mobile communications system;
Figure 2 illustrates a configuration of en embodiment of the current invention in the communication system of Figure 1;
Figure 3 illustrates the main procedural steps required for utilizing parallel media flows between two users;
Figure 4 illustrates connection setup according to the embodiment of the invention;
Figure 5 illustrates in more detail an embodiment of capability exchange during connection setup;
Figure 6 illustrates and embodiment of setting up the circuit switched call;
Figure 7 illustrates signalling related to a situation where a parallel media flow is taken into use;
Figure.8 illustrates signalling in a configuration where the controlling network element is a service control point of CAMEL (customised applications for mobile network enhanced logic) network configuration; and
Figure 9 comprises a functional description of elements of an application server.

### DETAILED DESCRIPTION OF THE INVENTION

The invention is applicable to any communication system capable of transmitting data flows of at least media types between at least two users. Such systems include mobile communication systems as well as fixed telecommunication systems, and combinations of each. In the following, the present invention will be described by means of circuit switched and packet switched media flows in a third generation communication system. The embodiment serves as an example only, and does not limit the invention to, for example, mobile systems, or any specific terms used in the following description of the embodiment.

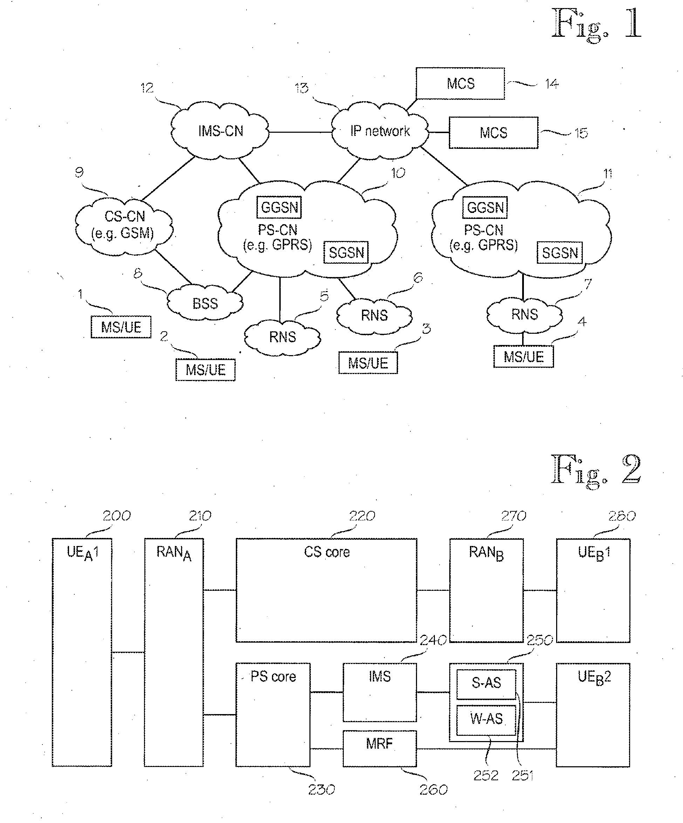

As illustrated in Fig 1, in the third generation (3G) mobile communications systems, a public land mobile network (PLMN) infrastructure may be logically divided into a core network (CN) 9,10,11,12 and access network (AN) infrastructures 5,6,7,8. The access network AN may be called a base station subsystem (BSS) 8 for the GSM and radio network subsystem (RNS), or radio access network (RAN) 5,6,7 for the UMTS.

In the technical specifications of a third generation partnership project (3GPP), the core network CN is logically divided into a circuit-switched (CS) domain 9, a packet-switched (PS) domain 10,11 and an IP multimedia subsystem (IMS) 12.

The CS domain refers to a set of all the CN entities offering CS type of connection for user traffic as well as all the entities supporting the related signalling. A CS type of connection is a connection for which dedicated network resources are allocated when a connection is established and released when the connection is released. A PS type of connection transfers the user information using packets so that each packet can be routed independently from the previous one. An example of the PS domain may be the GPRS (General Packet Radio Service), and the typical entities may include a serving GPRS support node (SGSN) and a gateway GPRS support node (GGSN). The IP multimedia subsystem comprises CN elements for provision of multimedia services. The IP multimedia subsystem IMS utilizes the PS domain to transport multimedia signalling and bearer traffic.

A UE accessing the PS CN, and the PS core network itself, utilizes the services provided by the Radio network subsystem (RNS) or Radio access network (RAN) 5,6,7,8 to provide packet-mode communication between the UE and the PS CN subsystem. The multiple access method employed in the air interface in the RAN may be Time Division Multiple Access (TDMA), Frequency Division Multiple Access (FDMA), Code Division Multiple Access (CDMA), or any other method or a combination thereof. In the 3^{rd} and higher generation mobile communications system the access method is primarily based on the CDMA. Further, because the traffic channels may have a wide bandwidth, corresponding to user data rates e.g. up to 2 Mbits/s, such access may also be referred as a Wideband CDMA (WCDMA).

In order to provide media communication services to the mobile stations MS/user equipment UE through the communication system, a packet based media communication system 14,15 may be provided on top of the mobile network. In Figure 1, the media communication system is embodied as a server system, and it is generally referred to as an application server. A communication system may comprise a plurality of media communication servers 14,15.

Figure 2 illustrates a configuration of en embodiment of the current invention in the communication system of Figure 1. As illustrated in Figure 2, a mobile user UE_{A} accesses the services of the communication system with user equipment UE_{A}1 100. UE_{A}1 provides required functionality to communicate over a defined radio interface with a radio access network RAN_{A} 110. The user equipment communicates with the radio access network via radio connections defined for the radio access network.

User equipment of the communication system can be a simplified terminal for speech only or a terminal for diverse services. In the latter case the terminal acts as a service platform and supports loading and execution of various functions related to the services. User equipment UE_{A}1 comprises a mobile equipment ME and a subscriber identity module USIM, typically a detachably connected identification card. In this context, the user equipment UE thus refers to the entity formed by the subscriber identity module and the actual mobile equipment. The subscriber identity module USIM is typically a smart card that holds the subscriber identity, performs authentication algorithms, and stores authentication and encryption keys and other subscription information that is needed at the mobile station. The mobile equipment ME may be any equipment capable of communicating in a mobile communication system or a combination of several pieces of equipment, for instance a multimedia computer to which a card phone has been connected to provide a mobile connection.

In radio access network RAN_{A}, coverage area of transceivers that belong to the same base station form a cell. The user may move from one network cell to another, and the network hands the user over to a different cell according to the movement. Each base station is connected to a base station controller, which controls the radio frequencies and channels used by the base station. The base station controller is connected over a defined interface to a mobile switching centre, and thus provides the interface between the radio access network and the core network.

Figure 2 also shows user equipment UE_{B}1 280 that provides a mobile user UE_{B} with access to the services of the communication system through communicating with a radio access network RAN_{B} 270. In Figure 2 radio access networks RAN_{A} and RAN_{B} are shown as separate networks. For a person skilled in the art it is clear that users UE_{A} and UE_{B} may also be subscribers of the same network, wherein RAN_{A} is the same as RAN_{B}.

As discussed above, the core network is logically divided into circuit switched (CS) domain 220, packet switched (PS) domain 230 and an IP multimedia subsystem (IMS) 240. In terms of physical elements, the domains may be overlapping, i.e. they may contain some common core network entities.

The CS domain 220 comprises core network entities that offer CS type of connection for user traffic, and support the related signaling. In the embodiment of Figure 2, the entities specific to the CS domain comprise a Mobile Services Switching Centre (MSC), a Gateway MSC (GMSC), a Visitor Location Register (VLR).

The PS domain 230 refers to the set of core network entities that offer packet switched of connection for user traffic and support the related signaling. In the embodiment of Figure 2, the entities specific to the PS domain are the GPRS specific entities, i.e. a Serving GPRS (General Packet Radio Service) Support Node (SGSN) and a Gateway GPRS Support Node (GGSN).

Some core network entities are not specifically defined as CS or PS domain specific entities. For example, a Home Location Register (HLR), is common to the CS and PS domains.

The IP Multimedia Core Network subsystem (IMS) 240 comprises core network elements for provision of IP multimedia services, such as audio, video, text, chat, etc. and a combination of them. The session flow procedures of IP CN subsystem session are controlled by a call session control function (CSCF), which is divided into several different roles. A Proxy-CSCF (P-CSCF) is substantially the first contact point within the IP CN subsystem. The P-CSCF behaves like a proxy and thus accepts requests and services them internally or forwards them on. An Interrogating-CSCF (I-CSCF) is the contact point within an operator's network for all connections destined to a user of that network operator. A Serving-CSCF (S-CSCF) performs the session control services for the user equipment. It maintains a session state as needed by the network operator for support of the services. The S-CSCF usually contains a subscriber database to which required subscription data is downloaded when the user terminal registers to the S-CSCF. The roles and operation of these IMS call session control functions in implementing IMS sessions are described in public telecommunication standards and as such are familiar to a person skilled in the art.

Figure 2 shows also a media communication system 250 that serves to provide services to user equipment capable of accessing the communication system. The media communication system may be embodied as a server system, and is often referred by the general term application server AS.

The media communication server of Figure 2 is shown further divided into two logical entities, a SIP application server 251 (S-AS), and a Web application server 252 (W-AS). The SIP application server 251 (S-AS) represents herein an entity or entities that work together with the serving call state control function (S-CSCF). The SIP Application Server represents the part that may host and execute services, and influence and impact the SIP session on behalf of the services. When S-CSCF receives an incoming SIP session, it decides whether an Application Server is required to receive information related to the request to ensure appropriate service handling. The decision at the S-CSCF is based on filter information received from the HSS. This filter information is stored and conveyed on a per application server basis for each user. A Web application server 252 (W-AS) represents herein a distributed network entity or entities that provide business logic for applications. The application server is used to run user applications and it is accessible to clients though the IP network, but does not work directly with S-CSCF. The Web application server may be considered as part of a three-tier application, consisting of a graphical user interface, business logic, and a database. The control operations, also called as service logic, are hosted in the media communication center and implemented as predefined combined operation of the S-AS and WAS.

Figure 2 shows also a Multimedia Resource Function (MRF) 260 that is accessible to the user equipment UE_{A}1, UE_{B}2 of the communication system through the radio access network and packet switched core network, and is also capable to communicate with AS through IMS. MRF is typically divided into Multimedia Resource Function Controller (MRFC) and Multimedia Resource Function Processor (MRFP). MRFC acts as an interface towards AS through S-CSCF of IMS, and controls the operation of MRFP according to the information received from AS. MRFP, on the other hand, provides media stream resources, for example, for mixing and/or processing media streams of two or more parties, and for acting as a media source.

Figure 2 shows also further user equipment UE_{B}2 available to the user UE_{B}. UE_{B}2 provides the user functionality to communicate with the media communication system 250 and with the Multimedia resource Function 260. Typically such communication is implemented over an IP packet data network. An IP packet data network may comprise one or more networks that enable exchange of information using the Internet protocol. Packet data network can thus comprise a single local area network, a comprehensive multimode network that connects large numbers of terminals and computers over a wide area, or any combination of such.

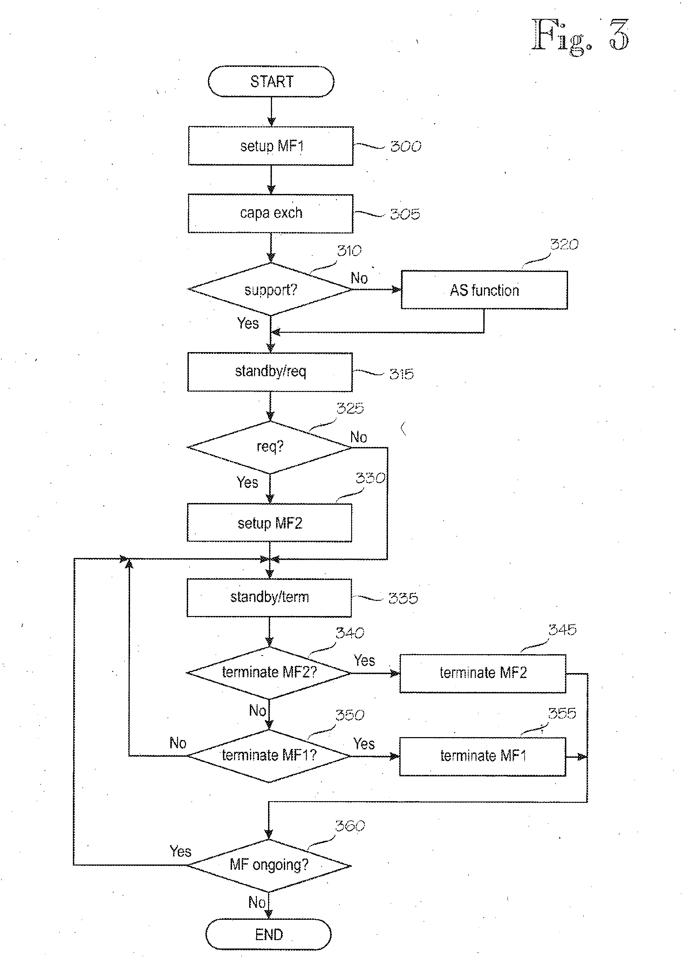

Figure 3 illustrates the main procedural steps according to the invention required for utilizing parallel media flows between two users UE_{A}, UE_{B}. These steps will be described in more detail later in the specification. Step 300 refers to the first setup procedure where a connection for the media flow of one type is established between user terminals of the two users. In the context of the embodiment of Figure 2, this connection may be, for example, a call or an IMS session.

During the connection setup, or directly after it, capability exchange (step 31) is performed between the two user terminals. The purpose of the capability exchange is to provide the endpoints of the communication with information on the services that can be supported. In the embodiment of Figure 2, two types of capability information are utilized: information about the current radio environment and UE capability information. It is also possible that the capability information of the user equipment has been exchanged already before the connection setup, and it is readily stored in the other endpoint. The order of steps 300 and 305 is not essential for the scope of protection.

If also the terminating user equipment and its current radio equipment support delivery of parallel media flows (step 310), the user equipment prepare to be standby for a request for a second media flow of another type (step 315). For example, if the first media flow relates to a circuit switched call and the second media flow relates to an IMS session, the user equipment perform necessary IMS registrations and thus become prepared for an invitation to an IMS session.

If such support does not exist, conventionally use of parallel media flows would be impossible. However, according to the invention, the application server of the system performs a function (step 320) such that the user equipment with support for parallel media flows receives necessary confirmations on the capability in the other end may enter the standby state normally as if the support in the other end exists. Additionally, an alternative route is opened for the second media flow to a secondary user terminal available to the user whose primary user equipment does not support parallel media flows. This way even the user with less capable terminal or in challenging radio environment may access both media flows and share all the information available in the communication event.

If a request for a second parallel media flow is received (step 325) a setup procedure for combining the first and the second media flow for simultaneous use between the same users (step 330) is performed. In the embodiment of Figure 2 this may mean adding an IMS session to an ongoing circuit switched call, or setting up a call during an ongoing IMS session between users UE_{A} and UE_{B}.

If the request is not received, or the after both the media flows are in parallel use, the procedure moves to a stage where termination of either of the medial flows is monitored (step 335). A user or users may decide to terminate the second media flow (steps 340, 345) and the first media flow (steps 350, 355). If both the media flows were in use, after termination it is checked whether a media flow is still ongoing (step 360). In the positive case, the procedure continues from step 335, otherwise no media flows are in use and the connection ends.

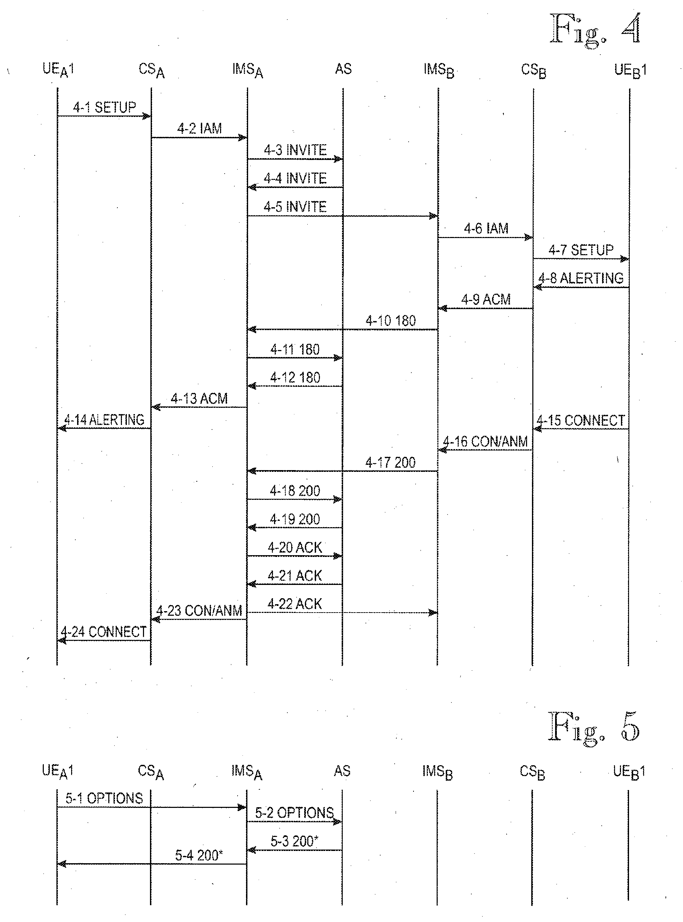

In the following, the procedures of Figure 3 are illustrated in more detail using the configuration in the embodiment of Figure 2. More specifically, a procedure for combining the media flow of a circuit switched call and the media flow of an IMS session according to the invention is first discussed step by step. Figure 4 illustrates in more detail an embodiment of involving a controlling network element into the connection setup such that the capability for using parallel media flows is established. Figure 4 shows signalling during the step of setting up the first media flow, in this case setting up the circuit switched call between a user equipment UE_{A}1 an originating user and a primary user equipment UE_{B}1 a terminating user. In Figure 4 the circuit switched domain and IMS core are shown as divided into separate entities. For a person skilled in the art it is clear that both users may also be subscribers of the same network, and the domains of UE_{A} and UE_{B} may also be same. Furthermore, the call setup procedure of Figure 4 follows an IMS controlled model, where the IMS core allows the application server to perform 3^{rd} party call control in the call setup procedure. For a person skilled in the art it is clear that there exists other mechanisms for involving the application server into the circuit call setup procedure, including use of Intelligent Network service control procedures.

In step 4-1 the originating user equipment UE_{A}1 initiates the circuit switched call by sending a SETUP message towards the terminating user equipment UE_{B}1. The originating user equipment UE_{A}1 includes in the message radio environment information, the personal mobile equipment identifier and user equipment capability version in the User-to-User Signaling supplementary service element of the SETUP message. The CS domain of the originating network (CSA) sends (step 4-2) an initial addressing message (IAM) to the IMS core of UE_{A}1. The initial addressing message includes the current radio environment information of UE_{A}1. An application server (AS) acts as a Back-to-Back User Agent and thus IMS core of UE_{A}1 (IMS_{A}) generates and sends (step 4-3) an INVITE request to AS. In receipt of the INVITE request, AS performs a control function, and then returns (step 4-4) the INVITE request to IMS_{A}. In the embodiment of Figure 4, the control function comprises checking whether a possibility for use of parallel media flows could be established.

The application server may be configured to manage the capability of the originating user equipment and the terminating user equipment, or only either of the endpoints. As for combinational services, such check may be implemented, for example, by detecting from the message user-to-user (UUS) signalling. AS thus checks the radio environment information in the INVITE message and also whether information related to combinational services is included in the user-to-user signalling.

In case AS is not configured to manage the capability of the originating end, it only needs to copy the positive or negative information on the capability and return the INVITE message to IMS_{A}. This is the situation also in case AS is configured to manage the capability of the originating end, and the information reveals that the capability for combinational service does exist in the originating end. If the information reveals that the capability for combinational service does not exist in the originating end, AS discards the information related to combinational services as given by UE_{A}1, and complements new information to the INVITE message. The new information by AS provides a positive indication on capability for combinational services in the originating endpoint. In case AS is also configured to manage the capability in the originating end, AS prepares for checking the responses from the terminating user equipment UE_{B}1 and for performing any necessary actions when the capability in either of the endpoints is clear. In the current embodiment the capability information exchanged during the connection setup is the current radio environment information.

IMS_{A} thus receives (step 4-4) an INVITE message from AS, and sends (step 4-5) it to the IMS core of UE_{B}1 (IMS_{B}). IMS_{B} generates (step 4-6) a call setup IAM to the CS domain of UE_{B}1 (CS_{B}). UE_{B}1 thus receives (step 4-7) a SETUP message comprising positive information of the capability for combinational services in the end of the originating user equipment UE_{A}1.

UE_{B}1 initiates defined conventional terminating call setup procedures, and thereby responds by sending (step 4-8) an ALERTING message to the CS core of UE_{B}1. In the IMS controlled operation, CS_{B} sends (step 4-9) to IMS_{B} an ACM (address complete message), which indicates that all the address signals required for routing the call to the called party have been received, and setup may proceed. In response to this, IMS_{B} sends (step 4-10) a SIP message. 180 RINGING to IMS_{A} that forwards (step 4-11) the message to AS. AS analyses the message, and returns (step 4-12) it to IMS_{A}. IMS_{A} sends (step 4-13) to CS_{A} an address complete message that informs (step 4-14) UE_{A} 1 that UE_{B}1 is alerting.

If the call setup in the terminating end succeeds, UE_{B}1 sends (step 4-15) a CONNECT -message to CS_{B}. UE_{B}1 includes in the CONNECT-message an indication on the capability for combinational services, in this embodiment the current radio environment information. CS_{B} sends (step 4-16) to IMS_{B} a CON or ANM (connect or answer message) that indicates in the backward direction that the call has been answered. CON/ANM message comprises the included indication on the capability for combinational services. Between and in the IMS domains IMS_{A} and IMS_{B} the information is exchanged (steps 4-17, 4-18, 4-19) as SIP 200 OK -messages. The messages comprise the included indication on the capability for combinational services, despite of any message transformation due to switch of domains.

AS receives (step 4-18) the SIP 200 OK message comprising the indication, it detects that the capability for combinational services does not exist in the terminating end, and discards the information related to combinational services given by UE_{B}1. AS complements new information to the CON/ANM message, such that a positive indication on capability for combinational services in the originating endpoint is given. Such positive indication may comprise an indication on simulated implementation of combinational service. When a user equipment detects such indication, it may further indicate the originating user that in the other end the service is simulated. AS sends (step 4-21) the amended CON/AMN message to IMS_{A}. From IMS_{A} the amended connect information is delivered to CS_{A} and from there in correspondingly amended CONNECT message to UE_{A}1 (step 4-22). IMS_{A} ends the so called SIP handshake by an acknowledgement (steps 4-20, 4-21, 4-22) delivered via AS to IMS_{B}.

Essentially in the procedure, the application server gets involved in the connection setup for the first media flow, and terminates any endpoint that it is assigned to manage such that use of parallel media flows is flagged green even if the capability does not currently exist in some endpoint.

In the embodied case of combinational services, the user terminal in the terminating end may be configured to check the SETUP message, or the user terminal in the originating end may be configured to check the CONNECT message to determine whether the capability exists in the other end. In a positive case, the user equipment may indicate to the user that the capability for combinational services exist in the other endpoint. The user equipment capable for combinational services may also be configured to attempt an IMS registration as soon as it detects the same capability in the other end during the call setup.

Continuing the embodiment of Figure 4, Figure 5 illustrates in more detail an embodiment of capability exchange during connection setup such that parallel media flows may be established in several new use cases. Figure 5 shows signalling in an attempt of setting up the circuit switched call between user equipment UE_{A}1 and primary user equipment UE_{B}1 of a terminating user. In the current embodiment the capability information is exchanged using the SIP OPTIONS procedure, which as a mechanism per se is conventional and generally known to a person skilled in the art.

Figure 5 illustrates a situation where the application server, on the basis of the signalling exchanged during the circuit switched call, already knows that the terminal user is not capable of parallel media flows. For example, user equipment UE_{B}1 may not have support for combinational services, or the radio environment is not good enough.

The SIP method OPTIONS allows an IMS user agent to query another IMS user agent or a proxy server as to its capabilities. The target of the OPTIONS request is identified by the Request-URI, which could identify another user agent or a SIP server. An OPTIONS message comprises an ACCEPT header that indicates the type of message body the originating user agent wishes to receive in the response, typically a format that is used to describe the media capabilities of the terminating end.

In Figure 5, the originating user equipment UE_{A}1 sends (step 5-1) towards UE_{B}1 a SIP OPTIONS request. The request comprises information, as a request URI, the tel URI, i.e. the MSISDN number of UE_{B}1. IMS_{A} performs conventional service control and routes (step 5-2) the OPTIONS message to the application server that acts as a Back-to-Back user agent. AS, being aware that UE_{B}1 is currently not capable of combinational services terminates the request. According to the invention, AS is also aware of a secondary user equipment type that is available to the terminating user. Instead of forwarding the request to IMS_{B}, AS terminates the request and provides the information that enables use of a secondary user equipment available to the terminating user UE_{B}. For example, AS may be preconfigured to assume that the secondary user equipment UE_{B}2 is a network terminal with a particular browser, and generate a capability exchange response with user media types available through the browser. Other mechanisms for maintaining the information are possible within the scope of protection, for example, the application server may have access to a database comprising a user-specific profiles that provide at least one media type available in a selected secondary user equipment UE_{B}2 available to each of the users.

AS sends (step 5-3) its modified SIP 200 OK response to IMS_{A} that forwards (step 5-4) the response to UE_{A}1, which stores the provided user equipment capability information and address information on UE_{B}1, however, not according to the capability of UE_{B}1, but in the form provided by AS.

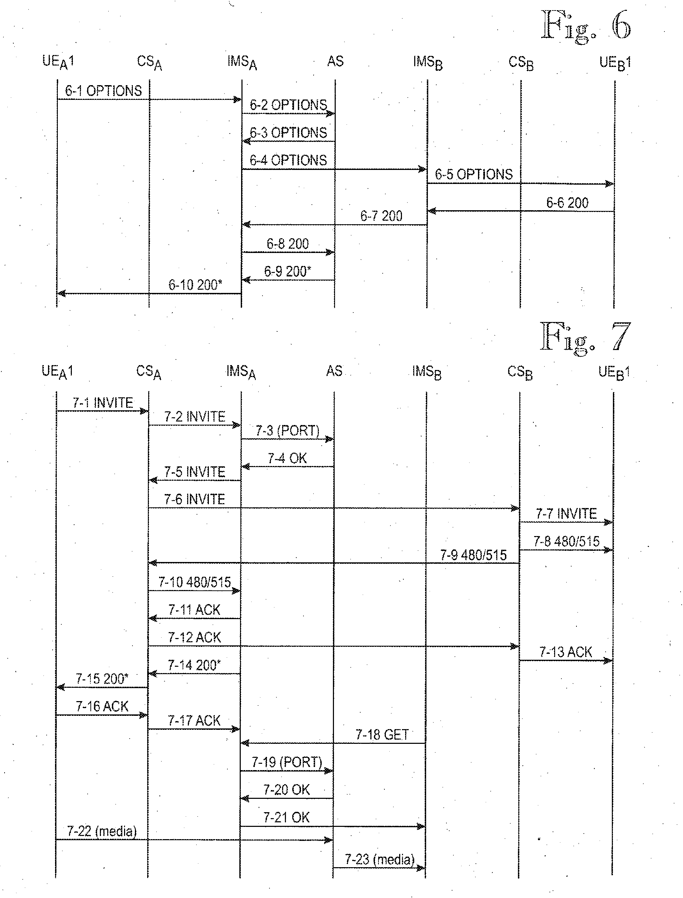

It is possible that even if the capability for parallel media flows exist in both endpoints, AS may extend the use of combinational service by complementing the user media types available through UE_{B}1 with user media types that are not supported by the primary user equipment UE_{B}1 but are available through the secondary user equipment UE_{B}2 available to the user UE_{B}. Figure 6 shows corresponding signalling in an attempt of setting up the circuit switched call between user equipment UE_{A}1 and primary user equipment UE_{B}1. Steps 6-1 to 6-2 correspond with steps 5-1 to 5-2 of Figure 5, where the OPTIONS request is sent towards UE_{B}1, and forwarded to the application server AS that acts as a Back-to-Back user agent. Signalling during the circuit switched call setup has not revealed a reason for AS to interfere with the capability exchange at this point, so it returns (step 6-3) the OPTIONS request back to IMS_{A}. On the basis of the request URI, IMS_{A} routes (step 6-4) the OPTIONS request to IMS_{B} that implements conventional service control and delivers (step 6-5) the request to UE_{B}1. UE_{B}1 responds (step 6-6) with SIP 200 OK message that IMS_{B} delivers (step 6-7) to IMS_{A}. IMS_{A} forwards (step 6-8) the information to AS that records the information provided by UE_{B}1, and in addition extends user media types with media types that are not supported by the primary user equipment UE_{B}1 but are available through secondary user equipment UE_{B}2. AS returns this modified response through IMS_{A} (step 6-9) to UE_{A}1 (step 6-10). UE_{A}1 stores the received capability information, this time the combined capability information of UE_{B}1 and UE_{B}2.

Being appropriately involved with the call setup and the capability exchange, the application server is thus able to detect that capability for using media flows is missing or limited, for example, due to insufficient terminal capability, bad radio environment, or unsupported media types, and control the signalling such that the possibility for later use of parallel media flows remains open.

Finally, Figure 7 illustrates the signalling related to a situation where a first media flow is available in the form of a circuit switched call between UE_{A}1 and UE_{B}1, capability exchange between the endpoints is implemented with back-to-back support of the application server, and a parallel media flow is taken into use. In addition to the elements of Figure 5 and Figure 6, Figure 7 also shows an element for Media Resource Function (MRF). MRF performs multiparty call and multimedia conferencing functions, is responsible for bearer control in case of multiparty or multimedia conference, and communicates with call state control for service validation for multiparty and multimedia sessions. In the embodiment of Figure 7, MRF operates on one-to-one connection between two user equipment, but for a person skilled in the art it is clear that the same principle is applicable also for communications comprising more that two endpoints.

Figure 7 also illustrates secondary user equipment UE_{B}2 of the terminating user UEB. In this embodiment the secondary user equipment is a network terminal configured with a web browser and an interface through which it may connect with the application server and MRF, as discussed in connection with Figure 2.

In the embodied exemplary case, the originating user wishes to share a whiteboard session during the ongoing circuit switched call, which is set up as shown in the earlier Figures 5 and 6. Through the user interface of his user equipment the originating user inputs a command to initiate an IMS session. The user equipment generates a SIP INVITE request and sends (step 7-1) it towards the terminating user equipment UE_{B}1. IMS_{A} forwards (step 7-2) the invitation to the application server AS that acts as a Back-to-Back user agent. AS instructs (step 7-3) MRF to reserve/allocate necessary resources, for example, listening port(s), for user media for example, RTP/RTCP (Real-Time Transport Protocol/ Real-Time Transport Control Protocol), or MSRP (Message Session Relay Protocol). If MRF is able to implement the instructed functions, it acknowledges (step 7-4) the instructions.

AS performs any preconfigured service functions and returns (step 7-5) the INVITE request to IMS_{A} that routes (step 7-6) the request to IMS_{B} and to UE_{B}1 (step 7-7). However, UE_{B}1 does not have the capability for combinational services and responds (step 7-8) with a negative acknowledgement, for example in the form of SIP 480 TEMPORARILY UNAVAILABLE or SIP 415 UNSUPPORTED MEDIA TYPE message. The response is again forwarded (steps 7-9, 7-10) to the application server that acknowledges it via IMS_{A} and IMS_{B} to UE_{B}1 (steps 7-11, 7-12, 7-13). Instead of forwarding the negative response to the originating user equipment, AS sends (step 7-14) a SIP 200 OK positive acknowledgement that IMS_{A} passes (step 7-15) on to UE_{A}1.

In the above example, the negative indication was performed by a SIP 480 TEMPORARILY UNAVAILABLE or SIP 415 UNSUPPORTED MEDIA TYPE message from the UE_{B}1. Depending on the implementation, the indication can be given with a variety of signals and also by a network element involved with the operations of the UE_{B}1. For example, IMS_{B} may be adjusted to return a SIP 480 TEMPORARILY UNAVAILABLE if it detects that UE_{B}1 is not registered to IMS. Alternatively IMS_{B} may return a SIP 404 NOT FOUND if it detects that UE_{B}1 is not provisioned to IMS (due to being a 2G subscriber).

The terminating user may be initially aware of the incapability to perform whiteboard sharing with UE_{B}1, or at some stage of the connection setup, capability exchange or invite procedures become aware of the situation. Furthermore, the terminating user is also informed on the possibility to use the other media flow in parallel but through another user equipment. For example, if UE_{B}1 receives during connection setup of the circuit switched call information on UEA1 capability for combinational services in user-to-user signalling, and notices that the corresponding capability is not available in its current configuration, it may be configured to inform the user about the situation in user interface of the terminal. A corresponding notification may be given also if such capability mismatch is detected during capability exchange. A further alternative relates to the actual session setup, where the terminating user equipment may, for example, be configured to inform the user on the detected incapability when it submits the negative response to the request. Alternatively, the application server may be configured to inform the user on the incapability with SMS when it receives the negative response. The instructions related to the secondary user equipment may be pre-programmed to UE_{B}1 or the application server may be configured to forward the instructions, for example, when it receives the negative response to the INVITE request. Essentially the user becomes aware that parallel media flows would be used and is instructed to log in to a defined application server in order to access the second media flow. For a person skilled in the art it is clear that these operations may be implemented in many ways, however, without deviating from the scope of protection.

The originating user equipment UE_{A}1 acknowledges the SIP session (steps 7-16 and 7-17) to AS. The terminating user equipment opens the web browser in the network terminal, logs into AS with a defined IP address and sends (step 7-18) a request to participate in a IMS session associated with the defined circuit switched call, identified by means of the user identities of both the terminating user and the originating user. In the embodied case the combined call and session is identified by means of MSISDN numbers of UE_{A}1 and UE_{B}1.

AS instructs (step 7-19) MRF to deliver the media flow associated with the reserved listening port (see step 7-3) to the secondary IP address, and in successful case MRF acknowledges (step 7-20) the instruction. When the session setup with the originating user equipment is completed and the positive acknowledgement on the path for secondary media flow is received, AS is able to acknowledge (step 7-21) the availability of the secondary media flow to the user through UE_{B}2. Steps 7-22 and 7-23 illustrate the flow of parallel information between the originating user through UE_{A}1 and the terminating user through UE_{B}2 via MRF.

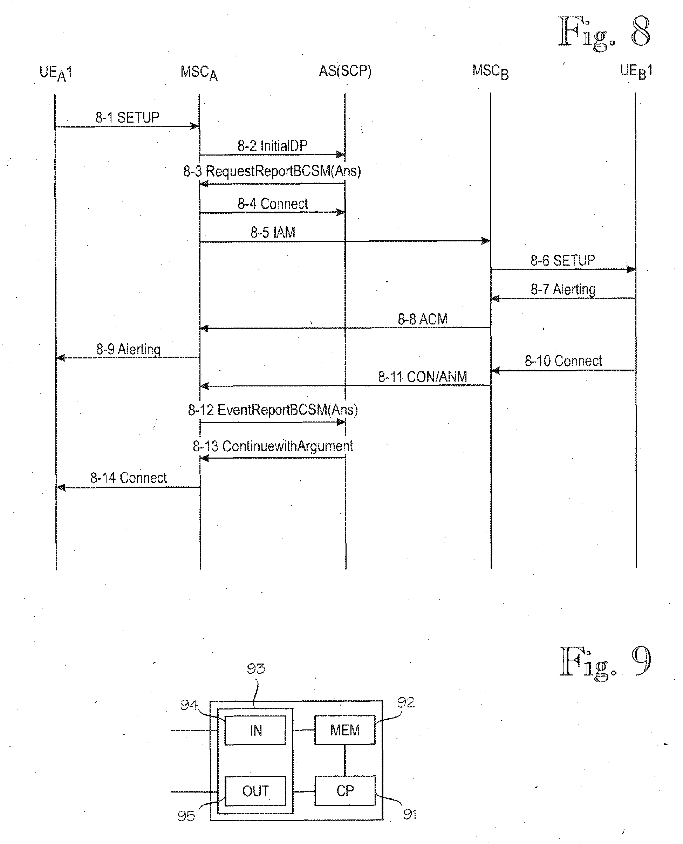

Figure 8 illustrates signalling in a configuration where the controlling network element is a service control point of CAMEL (customised applications for mobile network enhanced logic) network configuration. CAMEL is a network architecture that provides mechanisms to support intelligent network supported services to a roaming subscriber. The service control point is typically a physical entity in the telecommunication network which implements a service control function and has access to data and logic for controlling the processing of a call in order to provide a service. The core network of a telecommunication network comprises a mobile services switching centre (MSC), which performs the switching functions in its area of operation and controls the interworking with other networks. According to the operation principle of CAMEL, MSC also acts as a service switching function (SSF). SSF checks basic call state models for trigger detection point requests. In the request points, the service switching function (SSF) stops proceeding with the call processing until it gets further instructions from the service control function (SCF).

In step 8-1, the originating user equipment UE_{A}1 initiates the circuit switched call by sending a SETUP message towards the terminating user equipment UE_{B}1. According to the CAMEL procedures, the mobile services switching centre MSC_{A} of user equipment UE_{A}1 forwards (step 8-2) an InitialDP message to the network element acting as a service control point (SCP). SCP can be implemented, for example, as an application server AS.

As in the embodiment of Figure 4, in case AS operating as SCP is configured to manage the capability in either of the originating and the terminating end, and the information reveals that the capability for combinational service does not exist in either of the ends, AS discards the original information related to combinational services, and complements new information to the setup message. The new information by AS ensures a positive indication on capability for combinational services in the other endpoint, for example in the form a specific combinational service capable mobile terminal information. In the example of Figure 8, AS may control the capability of the originating end, and while noticing that the capability for combinational services is not available for UE_{A}1, may amend the negative combinational service information to a positive one. AS sends (step 8-3) a RequestReportBCSM message requesting an answer event report, and an amended Connect message (step 8-4) to the MSC_{A}. The call setup continues according to the delivery of IAM message (step 8-5) from MSC_{A} to MSC_{B}, and Setup message (step 8-6) from MSC_{B} to UE_{B}. In case of AS controlled capability information, UE_{B} thus receives a positive indication for combinational services. UE_{B} indicates the alerting state by Alerting message (step 8-7) to MSC_{B}. MSC_{B} informs MSC_{A} by ACM message (step 8-8) that all the address signals required for routing the call to the called party have been received, and MSC_{A} forwards the information to UE_{A} by Alerting message (step 8-9).

When UE_{B} indicates the next call state to MSC_{B} by Connect message (step 8-10), MSC_{B} sends (step 8-11) to MSC_{A} a CON/AMN message that indicates that all the address signals required for routing the call to the called subscriber have been received and that the call has been answered. This again triggers the service switching function, and MSC_{A} suspends the procedure and sends (step 8-12) EventReportBCSM answer to AS. AS requests by ContinueWithArgumentArg message (step 8-13) MSC_{A} to proceed with the suspended call processing, and at the same time provides additional service related information to a user (originating or terminating) whilst the call processing proceeds.

In the example of Figure 8, in case the received information indicates that capability for combinational services does not exist in the terminating user end (for example, due to the mobile terminal in use or the radio conditions) AS may replace the negative information by positive information of its own, for example in the form a specific combinational service capable mobile terminal information. This mobile terminal information is carried from MSC_{A} to UE_{A}1 (step 8-14) in a Connect message.

In case UE_{A}1 is of the type with capability for combinational services, it will check for information on the combinational service capability in the user-to-user signalling, and if such is detected, UE_{A}1 identifies the type of ME. The user equipment may be configured to detect from the mobile terminal information in the user-to-user signalling that combinational services is provided by simulation, and indicate this to the user through the user interface of UE_{A}1. Due to the AS involvement, the capability for combinational services for UE_{B}1 is flagged and the implementation of parallel media flows as illustrated in Figure 7 is possible.

In the above embodiments, the first media flow related to a circuit switched call, and the second media flow relates to a packet switched call. For a person skilled in the art it is clear that within the claimed scope the disclosed functionality may be applied on various types of media flows in any selected order.

In the following, an exemplary configuration for implementation of the controlling network element of the invention is given. Reference is made to Figure 9 that comprises a functional description of elements of an application server. The application server comprises processing means 91, an element that comprises an arithmetic logic unit, a number of special registers and control circuits. Connected to the processing means are memory means 92, a data medium where computer-readable data or programs or user data can be stored. The memory means typically comprise memory units that allow both reading and writing (RAM), and a memory whose contents can only be read (ROM). The element also comprises an interface block 93 with input means 94 for inputting data for internal processing in the element, and output means 95 for outputting data from the internal processes of the element. Examples of said input means comprise a plug-in unit acting as a gateway for information delivered to its external connection points. For receiving information on the operator of the application server, the application server may also comprise a keypad, or a touch screen, a microphone, or the like. Examples of said output means include a plug-in unit feeding information to the lines connected to its external connection points. For outputting information to the operator of the application server, they may also comprise a screen, a touch screen, a loudspeaker, or the like. The processing means 91, memory means 92, and interface block 93 are electrically interconnected for performing systematic execution of operations on the received and/or stored data according to the predefined, essentially programmed processes of the unit. In solutions according to the invention, the operations comprise functions for implementing the operations and interfaces of the application server as described above with Figures 3 to 8.

In an aspect, the invention provides a computer program product encoding a computer program of instructions for executing a computer process.

In another aspect, the invention provides a computer program distribution medium readable by a computer and encoding a computer program of instructions for executing a computer process.

The distribution medium may include a computer readable medium, a program storage medium, a record medium, a computer readable memory, a computer readable software distribution package, a computer readable signal, a computer readable telecommunications signal, and/or a computer readable compressed software package.

Embodiments of the computer process are shown and described in conjunction with Figures 3 to 8. The computer program may be executed, for example, in the processing means, like the signal processing unit of the application server or of the user terminal.

Even though the invention is described above with reference to an example according to the accompanying drawings, it is clear that the invention is not restricted thereto but it can be modified in several ways within the scope of the appended claims.

## Claims

1. A method of using parallel media flows in a telecommunication system; **characterized by** the method comprising:
Involving (4-3) a controlling network element in a network infrastructure of the telecommunication system to call or session setup signalling between a primary user equipment of a first user and a primary user equipment of at least one second user;
checking in the controlling network element from the call or session setup signalling the capability of the primary user equipment of the second user to maintain two parallel media flows;
in response to the controlling network element detecting that the capability does not exist in the primary user equipment of the second user:
amending in the controlling network element at least one message (4-21) of the call or session setup signalling such that capability of the primary user equipment of the second user to maintain two parallel media flows is indicated;
said controlling network element opening a first media flow between the primary user equipment of the first user and the primary user equipment of the second user;
said controlling network element diverting a second parallel media flow to a secondary user equipment of the second user.

2. A method according to claim 1, further **characterized by** involving a controlling network element to circuit switched call setup signalling, to a session setup signalling, or through intelligent network call setup signalling.

3. A method according to claim 1 or 2, further **characterized by** detecting the capability on the basis of user-to-user signalling between the primary user equipment of the first user and the primary user equipment of the second user.

4. A method according to any of claims 1 to 3, further **characterized by** amending the at least one message of the call or session setup signalling such that a simulated media type is included in a capability exchange request of the first user.

5. A method according to any of claims 1 to 4, **characterized by** one of the media flows comprising the data signals of a circuit switched call and the other media flow comprising the data signals of an IP multimedia subsystem session.

6. A network element for a telecommunication system, **characterized by** the network element comprising:
interface (93) for being involved with call or session setup signalling between a primary user equipment of a first user and a primary user equipment of at least one second user; and
a signal processing unit (91) for
checking from the call or session setup signalling the capability of the primary user equipment of the second user to maintain two parallel media flows;
in response detecting that the capability does not exist in the primary user equipment of the second user,
amending at least one message of the call or session setup signalling such that capability of the primary user equipment of the second user to maintain two parallel media flows is indicated; and
during a first media flow between the primary user equipment of the first user and the primary user equipment of the second user, diverting a second parallel media flow to a secondary user equipment of the second user.

7. A network element according to claim 6, **characterized by** being an application server comprising the functionality of a Session Initiation Protocol (SIP) application server.

8. A network element according to claim 6, **characterized by** being a Customised applications for mobile network enhanced logic (CAMEL) service switching point.

9. A network element according to claims 6, 7, or 8, further **characterized by** being configured to detect the capability on the basis of user-to-user signalling between the primary user equipment of the first user and the primary user equipment of the second user.

10. A network element according to any of claims 6 to 9, further **characterized by** being configured to amend the signalling such that a simulated media type is included in a capability exchange request of the first user.

11. A network element according to any of claims 6, 7, 9, 10, or 11, **characterized by** either of the media flows comprising the data signals of a circuit switched call and the other media flow comprising the data signals of an IP multimedia subsystem session.

12. A telecommunication system comprising a plurality of user equipment (1, 2, 3, 4) and a network infrastructure, the network infrastructure further comprising the controlling network element (14, 15) of any of claims 6 to 11..

13. A telecommunication system according to claim 12, **characterized by** the primary user equipment of the first and the second user being a mobile station and the secondary user equipment of the second user being an Internet Protocol capable computer.

14. User equipment for a telecommunication system that comprises a plurality of user equipment and a network infrastructure, **characterized by** the user equipment comprising:
interface for exchanging signals with the network infrastructure;
signal processing unit for detecting in call or session setup signalling an indication on capability of a primary user equipment of a second user to maintain two parallel media flows, the indication given by a controlling network element; and
user interface for indicating to the first user, in response to detecting the indication, that a second parallel media flow will be diverted to a secondary user equipment of the second user.

15. A computer program product encoding a computer process of instructions for executing a computer process for
involving a controlling network element in a network infrastructure to call or session setup signalling between a primary user equipment of a first user and a primary user equipment of at least one second user;
checking in the controlling network element from the call or session setup signalling the capability of the primary user equipment of the second user to maintain two parallel media flows;
in response to the controlling network element detecting that the capability does not exist in the primary user equipment of the second user:
amending in the controlling network element at least one message of the call or session setup signalling signalling such that capability of the primary user equipment of the second user to maintain two parallel media flows is indicated;
said controlling network element opening a first media flow between the primary user equipment of the first user and the primary user equipment of the second user;
said controlling network element diverting a second parallel media flow to a secondary user equipment of the second user.

## Patentansprüche

1. Verfahren zur Verwendung von parallelen Medienflüssen in einem Telekommunikationssystem, **dadurch gekennzeichnet, dass** bei dem Verfahren:
ein steuerndes Netzelement in einer Netzwerkinfrastruktur des Telekommunikationssystems an einer Ruf- oder Sitzungsaufbausignalisierung zwischen einem primären Benutzerendgerät eines ersten Benutzers und einem primären Benutzerendgerät zumindest eines zweiten Benutzers beteiligt wird (4-3);
im steuernden Netzelement auf der Ruf- oder Sitzungsaufbausignalisierung basierend überprüft wird, ob das primäre Benutzerendgerät des zweiten Benutzers die Fähigkeit hat, zwei parallele Medienflüsse aufzubewahren;
als Reaktion darauf, dass das steuernde Netzelement ermittelt, dass keine Fähigkeit im primären Benutzerendgerät des zweiten Benutzers besteht:
im steuernden Netzelement zumindest eine Mitteilung (4-21) der Ruf- oder Sitzungsaufbausignalisierung derart geändert wird, dass die Fähigkeit des primären Benutzerendgeräts des zweiten Benutzers, zwei parallele Medienflüsse aufzubewahren, indiziert wird;
das besagte steuernde Netzelement einen ersten Medienfluss zwischen dem primären Benutzerendgerät des ersten Benutzers und dem primären Benutzerendgerät des zweiten Benutzers öffnet;
das besagte steuernde Netzelement einen zweiten parallelen Medienfluss zu einem sekundären Benutzerendgerät des zweiten Benutzers ablenkt.

2. Verfahren nach Patentanspruch 1, ferner **dadurch gekennzeichnet, dass** ein steuerndes Netzelement an einer leitungsvermittelten Rufaufbausignalisierung, an einer Sitzungsaufbausignalisierung oder durch eine Rufaufbausignalisierung eines intelligenten Netzes beteiligt wird.

3. Verfahren nach Patentanspruch 1 oder 2, ferner **dadurch gekennzeichnet, dass** die Fähigkeit aufgrund einer Teilnehmer-zu-Teilnehmer-Signalisierung zwischen dem primären Benutzerendgerät des ersten Benutzers und dem primären Benutzerendgerät des zweiten Benutzers ermittelt wird.

4. Verfahren nach einem der Patentansprüche 1 bis 3, **dadurch gekennzeichnet, dass** die zumindest eine Mitteilung der Ruf- oder Sitzungsaufbausignalisierung derart geändert wird, dass ein simulierter Medientyp in einer Fähigkeits-Austauschanforderung des ersten Benutzers enthalten ist.

5. Verfahren nach einem der Patentansprüche 1 bis 4, **dadurch gekennzeichnet, dass** einer der Medienflüsse die Datensignale eines leitungsvermittelten Anrufs aufweist und der andere Medienfluss die Datensignale einer IP-Multimedia-Subsystem-Sitzung aufweist.

6. Netzelement für ein Telekommunikationssystem, dadurch g e - **kennzeichnet,** dass das Netzelement umfasst:
eine Schnittstelle (93) zur Beteiligung an einer Ruf- oder Sitzungsaufbausignalisierung zwischen einem primären Benutzerendgerät eines ersten Benutzers und einem primären Benutzerendgerät zumindest eines zweiten Benutzers; und
eine Signalverarbeitungseinheit (91), die
auf der Ruf- oder Sitzungsaufbausignalisierung basierend überprüft, ob das primäre Benutzerendgerät des zweiten Benutzers die Fähigkeit hat, zwei parallele Medienflüsse aufzubewahren;
als Reaktion auf die Ermittlung, dass keine Fähigkeit im primären Benutzerendgerät des zweiten Benutzers besteht,
zumindest eine Mitteilung der Ruf- oder Sitzungsaufbausignalisierung derart ändert, dass die Fähigkeit des primären Benutzerendgeräts des zweiten Benutzers, zwei parallele Medienflüsse aufzubewahren, indiziert wird; und
während eines ersten Medienflusses zwischen dem primären Benutzerendgerät des ersten Benutzers und dem primären Benutzerendgerät des zweiten Benutzers einen zweiten parallelen Medienfluss zu einem sekundären Benutzerendgerät des zweiten Benutzers ablenkt.

7. Netzelement nach Patentanspruch 6, **dadurch gekennzeichnet, dass** es ein Anwendungsserver ist, der die Funktion eines Session Initiation Protocol (SIP) -Anwendungsservers aufweist.

8. Netzelement nach Patentanspruch 6, **dadurch gekennzeichnet, dass** es ein Schaltpunkt des Customised Applications for Mobile network Enhanced Logic (CAMEL) -Dienstes ist.

9. Netzelement nach Patentanspruch 6, 7 oder 8, dadurch g e - **kennzeichnet,** dass es konfiguriert ist, die Fähigkeit aufgrund einer Teilnehmer-zu-Teilnehmer-Signalisierung zwischen dem primären Benutzerendgerät des ersten Benutzers und dem primären Benutzerendgerät des zweiten Benutzers zu ermitteln.

10. Netzelement nach einem der Patentansprüche 6 bis 9, ferner **dadurch gekennzeichnet, dass** es konfiguriert ist, die Signalisierung derart zu ändern, dass ein simulierter Medientyp in einer Fähigkeits-Austauschanforderung des ersten Benutzers enthalten ist.

11. Netzelement nach einem der Patentansprüche 6, 7, 9, 10 oder 11, **dadurch gekennzeichnet, dass** einer der Medienflüsse die Datensignale eines leitungsvermittelten Anrufs aufweist und der andere Medienfluss die Datensignale einer IP-Multimedia-Subsystem-Sitzung aufweist.

12. Telekommunikationssystem mit mehreren Benutzerendgeräten (1, 2, 3, 4) und einer Netzwerkinfrastruktur, welche Netzwerkinfrastruktur ferner das steuernde Netzelement (14, 15) nach einem der Patentansprüche 6 bis 11 aufweist.

13. Telekommunikationssystem nach Patentanspruch 12, **dadurch gekennzeichnet, dass** das primäre Benutzerendgerät des ersten und des zweiten Benutzers eine Mobilstation und das sekundäre Benutzerendgerät des zweiten Benutzers ein Internet-Protokoll-fähiger Computer ist.

14. Benutzerendgerät für ein Telekommunikationssystem, das mehrere Benutzerendgeräte und eine Netzwerkinfrastruktur aufweist, **dadurch gekennzeichnet, dass** das Benutzerendgerät umfasst:
eine Schnittstelle zum Austauschen von Signalen mit der Netzwerkinfrastruktur;
eine Signalverarbeitungseinheit zur Ermittlung einer Indikation in einer Ruf- oder Sitzungsaufbausignalisierung über die Fähigkeit eines primären Benutzerendgeräts eines zweiten Benutzers, zwei parallele Medienflüsse aufzubewahren, welche Indikation von einem steuernden Netzelement gegeben wird; und
eine Benutzerschnittstelle zum Indizieren für den ersten Benutzer als Reaktion auf die Ermittlung der Indikation, dass ein zweiter paralleler Medienfluss zu einem sekundären Benutzerendgerät des zweiten Benutzers abgelenkt wird.

15. Computerprogrammprodukt, das einen Computerprozess von Anweisungen kodiert, um einen Computerprozess auszuführen, bei dem
ein steuerndes Netzelement in einer Netzwerkinfrastruktur an einer Ruf- oder Sitzungsaufbausignalisierung zwischen einem primären Benutzerendgerät eines ersten Benutzers und einem primären Benutzerendgerät zumindest eines zweiten Benutzers beteiligt wird;
im steuernden Netzelement auf der Ruf- oder Sitzungsaufbausignalisierung basierend überprüft wird, ob das primäre Benutzerendgerät des zweiten Benutzers die Fähigkeit hat, zwei parallele Medienflüsse aufzubewahren;
als Reaktion darauf, dass das steuernde Netzelement ermittelt, dass keine Fähigkeit im primären Benutzerendgerät des zweiten Benutzers besteht:
im steuernden Netzelement zumindest eine Mitteilung der Ruf- oder Sitzungsaufbausignalisierung derart geändert wird, dass die Fähigkeit des primären Benutzerendgeräts des zweiten Benutzers, zwei parallele Medienflüsse aufzubewahren, indiziert wird;
das besagte steuernde Netzelement einen ersten Medienfluss zwischen dem primären Benutzerendgerät des ersten Benutzers und dem primären Benutzerendgerät des zweiten Benutzers öffnet;
das besagte steuernde Netzelement einen zweiten parallelen Medienfluss zu einem sekundären Benutzerendgerät des zweiten Benutzers ablenkt.

## Revendications

1. Procédé destiné à utiliser des flux multimédia parallèles dans un système de télécommunication; **caractérisé en ce que** le procédé comprend les étapes consistant à :
mettre en oeuvre (4 - 3) un élément de réseau de contrôle dans une infrastructure de réseau du système de télécommunication pour une signalisation d'établissement d'appel ou de session entre un matériel d'utilisateur primaire d'un premier utilisateur, et un matériel d'utilisateur primaire d'un second utilisateur au moins;
vérifier dans l'élément de réseau de contrôle à partir de la signalisation d'établissement d'appel ou de session, la capacité que présente le matériel d'utilisateur primaire du second utilisateur, de maintenir deux flux multimédia parallèles ;
en réponse à l'élément de réseau de contrôle qui détecte que la capacité n'existe pas dans le matériel d'utilisateur primaire du second utilisateur :
modifier dans l'élément de réseau de contrôle au moins un message (4 - 21) de la signalisation d'établissement d'appel ou de session de telle sorte que la capacité que présente le matériel d'utilisateur primaire du second utilisateur de maintenir deux flux multimédia parallèles, soit indiquée ;
ledit élément de réseau de contrôle ouvrant un premier flux multimédia entre le matériel d'utilisateur primaire du premier utilisateur et le matériel d'utilisateur primaire du second utilisateur ;
ledit élément de réseau de contrôle détournant un second flux multimédia parallèle vers un matériel d'utilisateur secondaire du second utilisateur.

2. Procédé selon la revendication 1, **caractérisé en outre par** une étape consistant à mettre en oeuvre un élément de réseau de contrôle pour une signalisation d'établissement d'appel à commutation de circuits, pour une signalisation d'établissement de session, ou par l'intermédiaire d'une signalisation d'établissement d'appel de réseau intelligente.

3. Procédé selon la revendication 1 ou la revendication 2, **caractérisé en outre par** une étape consistant à détecter la capacité, sur la base d'une signalisation d'utilisateur à utilisateur entre le matériel d'utilisateur primaire du premier utilisateur et le matériel d'utilisateur primaire du second utilisateur.

4. Procédé selon l'une quelconque des revendications 1 à 3, **caractérisé en outre par** une étape consistant à modifier le ou les messages de la signalisation d'établissement d'appel ou de session de telle sorte qu'un type multimédia simulé soit inclus dans une demande d'échange de capacité du premier utilisateur.

5. Procédé selon l'une quelconque des revendications 1 à 4, **caractérisé par le fait que** l'un des flux multimédia comprend les signaux de données d'un appel à commutation de circuits, et que l'autre des flux multimédia comprend les signaux de données d'une session d'un système secondaire multimédia IP.

6. Élément de réseau d'un système de télécommunication, **caractérisé par le fait que** l'élément de réseau comprend :
une interface (93) à mettre en oeuvre avec une signalisation d'établissement d'appel ou de session entre un matériel d'utilisateur primaire d'un premier utilisateur et un matériel d'utilisateur primaire d'un second utilisateur au moins ; et
une unité de traitement du signal (91) destinée à :
vérifier à partir de la signalisation d'établissement d'appel ou de session, la capacité que présente le matériel d'utilisateur primaire du second utilisateur, de maintenir deux flux multimédia parallèles ;
en réponse à une détection selon laquelle la capacité n'existe pas dans le matériel d'utilisateur primaire du second utilisateur :
modifier au moins un message de la signalisation d'établissement d'appel ou de session de telle sorte que la capacité que présente le matériel d'utilisateur primaire du second utilisateur de maintenir deux flux multimédia parallèles, soit indiquée ; et
au cours d'un premier flux multimédia entre le matériel d'utilisateur primaire du premier utilisateur et le matériel d'utilisateur primaire du second utilisateur, détourner un second flux multimédia parallèle vers un matériel d'utilisateur secondaire du second utilisateur.

7. Élément de réseau selon la revendication 6, **caractérisé par le fait qu'**il s'agit d'un serveur d'applications qui comprend la fonctionnalité d'un serveur d'applications de protocole d'ouverture de session (SIP).

8. Élément de réseau selon la revendication 6, **caractérisé par le fait qu'**il s'agit d'un commutateur d'accès aux services d'applications personnalisées pour une logique améliorée de réseau mobile (CAMEL).

9. Élément de réseau selon l'une quelconque des revendications 6 à 8, **caractérisé en outre par le fait qu'**il est configuré de façon à détecter la capacité sur la base d'une signalisation d'utilisateur à utilisateur entre le matériel d'utilisateur primaire du premier utilisateur et le matériel d'utilisateur primaire du second utilisateur.

10. Élément de réseau selon l'une quelconque des revendications 6 à 9, **caractérisé en outre par le fait qu'**il est configuré de façon à modifier la signalisation de telle sorte qu'un type multimédia simulé soit inclus dans une demande d'échange de capacité du premier utilisateur.

11. Élément de réseau selon l'une quelconque des revendications 6, 7, 9, 10 ou 11, **caractérisé par le fait que** l'un ou l'autre des flux multimédia comprend les signaux de données d'un appel à commutation de circuits, et que l'autre des flux multimédia comprend les signaux de données d'une session d'un système secondaire multimédia IP.

12. Système de télécommunication comprenant une pluralité de matériels d'utilisateurs (1, 2, 3, 4) et une infrastructure de réseau, l'infrastructure de réseau comprenant en outre l'élément de réseau de contrôle (14, 15) selon l'une quelconque des revendications 6 à 11.

13. Système de télécommunication selon la revendication 12, **caractérisé par le fait que** le matériel d'utilisateur primaire du premier et du second utilisateur est une station mobile, et que le matériel d'utilisateur secondaire du second utilisateur est un ordinateur qui supporte le protocole Internet.

14. Matériel d'utilisateur d'un système de télécommunication qui comprend une pluralité de matériels d'utilisateurs et une infrastructure de réseau, **caractérisé par le fait que** le matériel d'utilisateur comprend :
une interface destinée à échanger des signaux avec l'infrastructure de réseau ;
une unité de traitement du signal destinée à détecter dans une signalisation d'établissement d'appel ou de session, une indication qui concerne la capacité que présente un matériel d'utilisateur primaire d'un second utilisateur, de maintenir deux flux multimédia parallèles, l'indication étant donnée par un élément de réseau de contrôle ; et
une interface utilisateur destinée à indiquer au premier utilisateur, en réponse à une détection de l'indication, qu'un second flux multimédia parallèle sera détourné vers un matériel d'utilisateur secondaire du second utilisateur.

15. Produit programme informatique qui code un processus informatique d'instructions destinées à exécuter un processus informatique destiné à :
mettre en oeuvre un élément de réseau de contrôle dans une infrastructure de réseau pour une signalisation d'établissement d'appel ou de session entre un matériel d'utilisateur primaire d'un premier utilisateur, et un matériel d'utilisateur primaire d'un second utilisateur au moins ;
vérifier dans l'élément de réseau de contrôle en provenance de la signalisation d'établissement d'appel ou de session, la capacité que présente le matériel d'utilisateur primaire du second utilisateur, de maintenir deux flux multimédia parallèles ;
en réponse à l'élément de réseau de contrôle qui détecte que la capacité n'existe pas dans le matériel d'utilisateur primaire du second utilisateur :
modifier dans l'élément de réseau de contrôle au moins un message de la signalisation d'établissement d'appel ou de session de telle sorte que la capacité que présente le matériel d'utilisateur primaire du second utilisateur de maintenir deux flux multimédia parallèles, soit indiquée ;
ledit élément de réseau de contrôle ouvrant un premier flux multimédia entre le matériel d'utilisateur primaire du premier utilisateur et le matériel d'utilisateur primaire du second utilisateur ;
ledit élément de réseau de contrôle détournant un second flux multimédia parallèle vers un matériel d'utilisateur secondaire du second utilisateur.
